# EUROPEAN PATENT APPLICATION

(11) **EP 4 765 294 A1**
(43) Date of publication of application: **24.06.2026**
(21) Application number: 24853874.6
(22) Date of filing: 16.08.2024
(51) Int. Cl.: H01M 10/058, H01M 10/0525, H01M 10/0567, H01M 10/42, H01M 4/133, H01M 4/62, H01M 4/587

(54) **HIGH-RATE AND HIGH-CAPACITY LITHIUM-ION BATTERY HAVING GRAPHITE NEGATIVE ELECTRODE AND PREPARATION METHOD THEREFOR, AND VEHICLE**

(30) Priority: 17.08.2023 CN 202311036466
(71) Applicant: Guangxi LiuGong Machinery Co., Ltd., Liuzhou Guangxi 545007 (CN)
(72) Inventor: LIN, Bo, Liuzhou, Guangxi 545007 (CN); WEI, Helei, Liuzhou, Guangxi 545007 (CN); TAN, Mingfeng, Liuzhou, Guangxi 545007 (CN); LI, Qi, Liuzhou, Guangxi 545007 (CN)
(74) Representative: Cabinet Beaumont
(86) International application number: PCT/CN2024/112596
(87) International publication number: WO 2025/036468

(57) **Abstract**

Provided in the present application are a high-rate and high-capacity lithium-ion battery having a graphite negative electrode and a preparation method therefor, and a vehicle. The lithium-ion battery having a graphite negative electrode comprises a positive electrode, a negative electrode, a separator and an electrolyte, wherein the material of the negative electrode comprises an ion conducting agent, the ion conducting agent comprising -SO₃Li-modified graphene; and the electrolyte comprises an electrolyte additive, the electrolyte additive comprising fluoroethylene carbonate. The -SO₃Li-modified graphene is introduced into the material of the negative electrode to serve as an ion conducting agent, fluoroethylene carbonate is added to the electrolyte to serve as an electrolyte additive, and the graphene and the fluoroethylene carbonate are matched and coordinated, thereby facilitating the uniform growth of an SEI film on the surface of the negative electrode; therefore, the obtained lithium-ion battery having a graphite negative electrode shows a high specific capacity, a high rate capability, and good cycle performance.

## Description

### TECHNICAL FIELD

The present application belongs to the technical field of lithium-ion battery, and specifically relates to a high-rate and high-capacity graphite anode lithium-ion battery, a preparation method therefor and a vehicle.

### BACKGROUND

Lithium-ion batteries have the advantages of high energy density, long cycle lifetime, and environmental friendliness, and have been widely used in portable electronic devices, energy storage, and power vehicles. In recent years, despite extensive research have been made on materials to replace graphite anodes (such as silicon-based, tin-based, and metal sulfides), graphite remains the main anode material in commercial lithium-ion batteries, mainly due to the advantages of graphite anodes such as excellent reversibility of lithium intercalation/deintercalation, good structural stability, and low working potential (~0.1 V). However, with the deepening of research, researchers have found that there are still many problems and technical bottlenecks in graphite anodes under high-rate charging and discharging conditions. For example, (1) large polarization, making the lithium intercalation potential of graphite as low as <0 V, causing the lithium precipitation phenomenon and even the formation of dendrites, which will lead to the increase of battery internal resistance and capacity attenuation, and further lead to a sharp attenuation of cycling performance, seriously affecting the service lifetime of the power battery; (2) due to the layered structure of graphite material, the intercalation of lithium ions need to occur from the edges and subsequently diffuse gradually into the interior, which results in extended ion transport pathways, thereby preventing satisfactory rate performance; and (3) the small layer spacing of graphite materials causes large diffusion resistance of lithium ions, which leads to a slow kinetic process of lithium intercalation and limits the rate performance of batteries.

Therefore, how to accelerate the transfer of lithium ions and charges in graphite anode materials, improve the ion/electron conductivity, improve the wettability of the surface of graphite anode materials and the electrolyte, reduce the interfacial charge transfer resistance, regulate the structural transformation of materials under high-rate charging and discharging conditions, inhibit volume expansion, build a robust solid electrolyte interface (SEI) film, and inhibit lithium precipitation on the surface of the anode have become the focus of research.

CN109859960A discloses a sulfonated graphene-based carbon-coated lithium titanate composite, a preparation therefor and an application thereof. However, the diameter of the sulfonated graphene provided by the invention is large, and the irreversible capacity ratio of the initial charge and discharge is relatively large, and the obtained lithium-ion battery is still difficult to achieve good rate performance and cycle lifetime at the same time.

Therefore, it is an urgent technical problem that needs to be solved in this field that develop a graphite anode lithium-ion battery that combines high rate, high capacity, and long cycle lifetime.

### SUMMARY

The following is a brief summary of subject matter that is described in greater detail herein. This summary is not intended to be limiting as to the scope of the claims.

The present application provides a high-rate and high-capacity graphite anode lithium-ion battery, a preparation method therefor and a vehicle. By incorporating -SO₃Li-modified graphene as a lithium-ion conductive agent into an anode material and matching with the addition of fluoroethylene carbonate as an electrolyte additive in an electrolyte, the resulting graphite anode lithium-ion battery exhibits high capacity, excellent cycling performance and rate capability.

In a first aspect, the present application provides a high-rate and high-capacity graphite anode lithium-ion battery, and the graphite anode lithium-ion battery comprises a cathode, an anode, a separator, and an electrolyte;
the anode material comprises an ion conductive agent, and the ion conductive agent comprises -SO₃Li-modified graphene; and
the electrolyte comprises an electrolyte additive, and the electrolyte additive comprises fluoroethylene carbonate.

The high-rate and high-capacity graphite anode lithium-ion battery provided by the present application comprises a cathode, an anode, a separator, and an electrolyte, the anode material comprises an ion conductive agent, and the electrolyte comprises an electrolyte additive. In the present application, by selecting -SO₃Li-modified graphene as the ion conductive agent and matching with fluoroethylene carbonate as the electrolyte additive, these two act synergistically, and the resulting graphite anode lithium-ion battery exhibits high capacity, excellent cycling performance and rate capability.

Specifically, on the one hand, in the present application, by adding -SO₃Li-modified graphene as an ion conductive agent to the anode material, which helps to form a robust solid electrolyte interface (SEI film) at the interface between the graphite anode and the electrolyte, thereby effectively increasing the diffusion rate of Li⁺, and also effectively reducing the risk of expansion and rupture of the SEI film at the graphite anode interface; at the same time, the sulfonic acid functional group in -SO₃Li is lithium-philic, which is conducive to the adsorption and transfer of Li⁺ , accelerating electrode reaction kinetics; furthermore, the Li⁺ in -SO₃Li can directly participate in the formation of the SEI film, which further helps to construct a robust SEI film with cross-linked chemical bonds, effectively reducing the loss of active lithium and reducing the irreverable capacity of lithium-ion batteries. On the other hand, in the present application, fluoroethylene carbonate (FEC) is added into the electrolyte as an electrolyte additive, which can effectively participate in the formation of the anode SEl film, and can act synergistically with -SO₃Li-modified graphene to bring excellent rate performance of the battery. In addition, the thin SEI film formed by FEC on the surface of the graphite anode is tough and self-healing, which helps to reduce the impedance of the graphite anode lithium-ion battery and significantly improve the charging and discharging performance of the battery.

In summary, the present application introduces -SO₃Li-modified graphene as an ion conductive agent in the anode material, and matches with the addition of fluoroethylene carbonate in the electrolyte as an electrolyte additive, these two act synergistically, which helps to induce the uniform growth of the SEI film on the surface of the anode, thereby improving the dendrite-free morphology of the graphite anode in the repeated charging and discharging process, and the resulting graphite anode lithium-ion battery exhibits high specific capacity and rate capability, and excellent cycling performance.

It should be noted that there are no special restrictions on the preparation method for -SO₃Li-modified graphene provided in the present application. Specifically, -SO₃Li-modified graphene may be obtained through mixing a lithium-containing compound (such as lithium hydroxide and lithium oxide) and sulfonated graphene in water, and then drying.

It should also be noted that the "high rate" in the "high-rate and high-capacity graphite anode lithium-ion battery" mentioned in the present application refers to the graphite anode lithium-ion battery delivers a specific capacity of more than or equal to 275.9 mAh/g under 1C constant-current charge-discharge cycle, and "high capacity" refers to the graphite anode lithium-ion battery delivers a specific capacity of more than or equal to 370.5 mAh/g.

Preferably, a mass percentage content of the ion conductive agent in the anode material is 0.1-3%, for example, 0.5%, 0.7%, 0.9%, 1.1%, 1.3%, 1.5%, 1.7%, 1.9%, 2.2%, 2.4%, 2.6%, or 2.8%. Preferably, 0.5-2%.

In a preferred embodiment of the present application, the advantages of limiting the ion conductive agent in the anode material to 0.1-3% are as follows: on the one hand, if the proportion of the ion conductive agent in the anode material is overly high, the irreversible capacity in the initial Coulombic efficiency of the battery will increase, the cost will be overly high, which is not conducive to large-scale commercial popularization and application; on the other hand, if the proportion of the ion conductive agent in the anode material is overly low, the rate and capacity of the battery will fail to improve significantly.

Preferably, the anode material further comprises graphite, an anode binder, and an anode conductive agent.

Preferably, a mass percentage content of graphite in the anode material is 89.5-95.5%, for example, 90%, 90.5%, 91%, 91.5%, 92%, 92.5%, 93%, 93.5%, 94%, 94.5%, or 95%.

Preferably, a mass percentage content of the anode binder in the anode material is 2-5%, for example, 2.5%, 3%, 3.5%, 4%, or 4.5%.

Preferably, the anode binder comprises sodium carboxymethyl cellulose and/or styrene-butadiene rubber latex.

Preferably, a mass percentage content of the anode conductive agent in the anode material is 2-5%, for example, 2.5%, 3%, 3.5%, 4%, or 4.5%.

Preferably, the anode conductive agent comprises carbon black and/or carbon nanotubes.

Preferably, the anode material comprises any one or a combination of at least two of C-O bond, C-S bond, Li-O bond, C=C bond, or C-F bond.

Preferably, a mass percentage content of fluoroethylene carbonate in the electrolyte is 4-5%, for example, 4.1%, 4.2%, 4.3%, 4.4%, 4.5%, 4.6%, 4.7%, 4.8%, or 4.9%.

Preferably, the electrolyte further comprises a solvent and a solute.

Preferably, the solvent comprises any one or a combination of at least two of ethylene carbonate, diethyl carbonate, or ethyl methyl carbonate.

Preferably, the solute comprises lithium hexafluorophosphate.

Preferably, based on a volume of 1 L for the electrolyte, a molar amount of the solute is 0.5-1.5 mol, for example, 0.6 mol, 0.7 mol, 0.8 mol, 0.9 mol, 1 mol, 1.1 mol, 1.2 mol, 1.3 mol, or 1.4 mol.

Preferably, the separator comprises any one of a polyethylene separator, a polypropylene separator, or a polypropylene/polyethylene/polypropylene composite separator.

In a second aspect, the present application provides a preparation method for a graphite anode lithium-ion battery, which can be used for the preparation of the graphite anode lithium-ion battery as described in the first aspect. The preparation method comprises the following steps:
(1) mixing the anode material and an anode solvent, coating on an anode current collector, and subjecting the anode current collector to roll-pressing and slitting to obtain an anode plate; and
(2) assembling the anode plate obtained from step (1), a cathode plate, and a separator, and adding the electrolyte in drops to obtain the graphite anode lithium-ion battery.

Preferably, the anode solvent in step (1) comprises water.

Preferably, the anode current collector in step (1) comprises a copper foil.

In a third aspect, the present application provides a vehicle, which applies the graphite anode lithium-ion battery as described in the first aspect.

Compared with the related art, the present application has the following beneficial effects.
(1) The high-rate and high-capacity graphite anode lithium-ion battery provided by the present application comprises a cathode, an anode, a separator, and an electrolyte; the anode material comprises an ion conductive agent, and the ion conductive agent comprises - SO₃Li-modified graphene; the electrolyte comprises an electrolyte additive, and the electrolyte additive comprises fluoroethylene carbonate. By introducing -SO₃Li-modified graphene into the anode material as the ion conductive agent and matching with the addition of fluoroethylene carbonate into the electrolyte as the electrolyte additive, these two act synergistically, which is conducive to induce the uniform growth of the SEI film formed on the surface of the graphite anode, and can also regulate the wettability of the graphite anode and the electrolyte, and the resulting graphite anode lithium-ion battery exhibits high specific capacity and rate capability, and excellent cycling performance; and
(2) The present application further provides a preparation method for a high-rate and high-capacity graphite anode lithium-ion battery. In the preparation method, the ion conductive agent can be directly added into the anode slurry for preparation without additional equipment and operation, which is simple to operate, and easy to mass produce.

Other aspects will be appreciated upon reading and understanding the attached figures and detailed description.

### BRIEF DESCRIPTION OF DRAWINGS

FIG. 1 shows a scanning electron microscope diagram of -SO₃Li-modified graphene in Example 1; and
FIG. 2 shows a scanning electron microscope diagram of unmodified graphene in Comparative Example 1.

### DETAILED DESCRIPTION

The technical solutions of the present application are further described below in terms of specific embodiments. It should be clear to those skilled in the art that the embodiments are merely used for a better understanding of the present application, which should not be regarded as a specific limitation.

### Example 1

A high-rate and high-capacity graphite anode lithium-ion battery, which comprised a cathode, an anode, a separator, and an electrolyte;
wherein, the cathode was a pure lithium sheet;
an anode material comprised graphite, sodium carboxymethyl cellulose (Canrd, CMC-2200), styrene-butadiene rubber latex (Canrd, SBR-307), SP, and -SO₃Li-modified graphene in a mass percentage content of 95%, 1%, 1%, 2% and 1%, respectively;
the electrolyte comprised a solvent (composed of ethylene carbonate and diethyl carbonate in a volume ratio of 1:1), LiPF₆ with a molar concentration of 1 mol/L, and fluoroethylene carbonate with a mass percentage content of 4.5%; and
the separator was a polypropylene/polyethylene/polypropylene composite separator (Celgard 2325).

The preparation method for the graphite anode lithium-ion battery provided by the present application comprises the following steps:
(1) the sodium carboxymethyl cellulose was dispersed in deionized water to fully dissolved, SP was added and stirred for 5 h, then graphite and -SO₃Li-modified graphene was added and stirred for 5 h, to give an anode slurry with a solid content of 38%; the anode slurry was coated on a copper foil in a coating amount of 1.8 mg/cm², and the copper foil was dried at 90°C for 15 min and transferred to a vacuum oven for vacuum drying at 90°C for 30 h, then roll-pressed and slit to give an anode plate with a compacted density of 1.4 g/cm³;
(2) the pure lithium sheet, the separator, and the anode plate obtained from step (1) were assembled and added with the electrolyte dropwise, to give the high-rate and high-capacity graphite anode lithium-ion battery.

### Example 2

A high-rate and high-capacity graphite anode lithium-ion battery, which comprised a cathode, an anode, a separator, and an electrolyte;
wherein, the cathode was a pure lithium sheet;
an anode material comprised graphite, sodium carboxymethyl cellulose, styrene-butadiene rubber latex (Canrd, SBR-307), SP, and -SO₃Li-modified graphene in a mass percentage content of 94%, 1%, 2%, 2.5% and 0.5%, respectively;
the electrolyte comprised a solvent (composed of ethylene carbonate and diethyl carbonate in a volume ratio of 1:1), LiPF₆ with a molar concentration of 1 mol/L, and fluoroethylene carbonate with a mass percentage content of 4%; and
the separator was a polypropylene/polyethylene/polypropylene composite separator (Celgard 2325).

The preparation method for the graphite anode lithium-ion battery provided by the present application comprises the following steps:
(1) the sodium carboxymethyl cellulose was dispersed in deionized water to fully dissolved, SP was added and stirred for 4 h, then graphite and -SO₃Li-modified graphene was added and continuously stirred for 4 h, to give an anode slurry with a solid content of 38.4%; the anode slurry was coated on a copper foil in a coating amount of 1.9 mg/cm², and the copper foil was dried at 90°C for 15 min and transferred to a vacuum oven for vacuum drying at 90°C for 30 h, then roll-pressed and slit to give an anode plate with a compacted density of 1.5 g/cm³;
(2) the cathode plate obtained from step (1), the separator, and the anode plate obtained from step (1) were assembled and added with the electrolyte dropwise, to give the high-rate and high-capacity graphite anode lithium-ion battery.

### Example 3

A high-rate and high-capacity graphite anode lithium-ion battery, which differs from Example 1 only in that the mass percentage content of graphite in the anode material was 95.5%, and the mass percentage content of -SO₃Li-modified graphene was 0.5%. Other substances, usage amounts, and preparation method were all the same as those in Example 1.

### Example 4

A high-rate and high-capacity graphite anode lithium-ion battery, which differs from Example 1 only in that the mass percentage content of graphite in the anode material was 93%, and the mass percentage content of -SO₃Li-modified graphene was 3%. Other substances, usage amounts, and preparation method were all the same as those in Example 1.

### Example 5

A high-rate and high-capacity graphite anode lithium-ion battery, which differs from Example 1 only in that the mass percentage content of graphite in the anode material was 95.9%, and the mass percentage content of -SO₃Li-modified graphene was 0.1%. Other substances, usage amounts, and preparation method were all the same as those in Example 1.

### Example 6

A high-rate and high-capacity graphite anode lithium-ion battery, which differs from Example 1 only in that the mass percentage content of graphite in the anode material was 92%, and the mass percentage content of -SO₃Li-modified graphene was 4%. Other substances, usage amounts, and preparation method were all the same as those in Example 1.

### Example 7

A high-rate and high-capacity graphite anode lithium-ion battery, which differs from Example 1 only in that the mass percentage content of fluoroethylene carbonate in the electrolyte was 4%. Other substances, usage amounts, and preparation method were all the same as those in Example 1.

### Example 8

A high-rate and high-capacity graphite anode lithium-ion battery, which differs from Example 1 only in that the mass percentage content of fluoroethylene carbonate in the electrolyte was 5%. Other substances, usage amounts, and preparation method were all the same as those in Example 1.

### Example 9

A high-rate and high-capacity graphite anode lithium-ion battery, which differs from Example 1 only in that the mass percentage content of fluoroethylene carbonate in the electrolyte was 3%. Other substances, usage amounts, and preparation method were all the same as those in Example 1.

### Example 10

A high-rate and high-capacity graphite anode lithium-ion battery, which differs from Example 1 only in that the mass percentage content of fluoroethylene carbonate in the electrolyte was 6%. Other substances, usage amounts, and preparation method were all the same as those in Example 1.

### Comparative Example 1

A graphite anode lithium-ion battery, which differs from Example 1 only in that unmodified graphene was used to replace -SO₃Li-modified graphene. Other substances, usage amounts, and preparation method were all the same as those in Example 1.

### Comparative Example 2

A graphite anode lithium-ion battery, which differs from Example 1 only in that the mass percentage content of graphite in the anode material was 96%, and -SO₃Li-modified graphene was not added. Other substances, usage amounts, and preparation method were all the same as those in Example 1.

### Comparative Example 3

A graphite anode lithium-ion battery, which differs from Example 1 only in that fluoroethylene carbonate was not added in the electrolyte. Other substances, usage amounts, and preparation method were all the same as those in Example 1.

### Comparative Example 4

A graphite anode lithium-ion battery, which differs from Example 1 only in that the mass percentage content of graphite in the anode material was 96%, -SO₃Li-modified graphene was not added, and fluoroethylene carbonate was not added in the electrolyte. The other substances, their usage amounts, and the preparation method remained identical to those in Example 1.

### Performance tests:

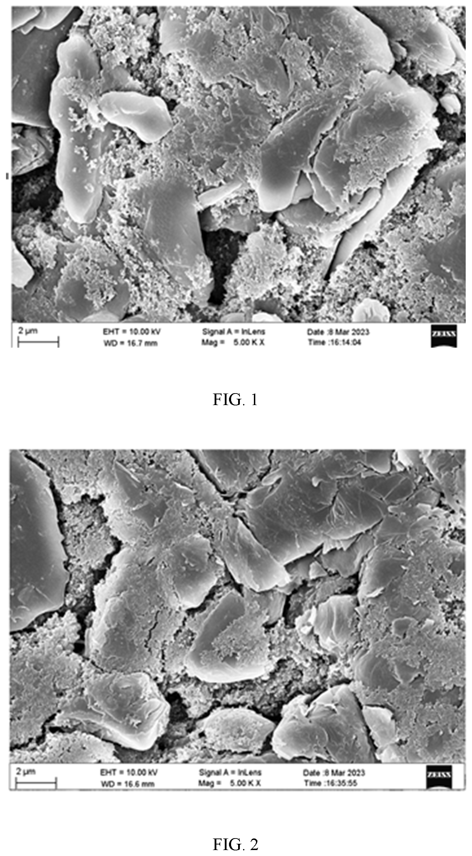

(1) morphology observation: a scanning electron microscope (Zeiss Sigma 500) was used to observe the -SO₃Li-modified graphene added in Example 1 and the unmodified graphene added in Comparative Example 1, and the scanning electron microscope diagram of the -SO₃Li-modified graphene added in Example 1 was obtained as shown in FIG. 1, and the scanning electron microscopy diagram of the unmodified graphene added in Comparative Example 1 was obtained as shown in FIG. 2;
   According to FIGs. 1 and 2, it can be seen that the morphology of the graphite anode with the addition of -SO₃Li-modified graphene is basically the same as that without the addition, indicating that the addition of -SO₃Li-modified graphene does not affect the overall morphology of the graphite anode. However, from the analysis at the microscopic level, the surface of the graphite anode modified with -SO₃Li-modified graphene is smoother, and the pre-embedded lithium ions are conducive to the growth and formation of the solid electrolyte interface (SEI), which play a key role in the various performances of the battery.
(2) Initial Coulombic efficiency: the test was performed under 0.1C constant-current charging-discharging;
(3) Specific capacity: the specific capacity was tested under 0.1C rate constant-current discharging;
(4) Rate performance: the constant-current charging-discharging was performed under 0.1C, 0.2C, 0.5C, 1C, 2C, 5C, and 0.1C rates, and the discharge capacity at 1C was selected; and
(5) Cycle capacity retention: the capacity retention rate after 50 cycles of constant-current charging and discharging at a rate of 0.1C.

The graphite anode lithium-ion batteries provided by Examples 1-10 and Comparative Examples 1-4 were subjected to tests according to the above test methods, and the results are shown in Table 1.

**Table 1**

| | Specific capacity /mAh/g | Initial Coulombic efficiency /% | Rate performance /mAh/g | Cycle capacity retention /% |
|---|---|---|---|---|
| Example 1 | 405.8 | 100.0 | 300.2 | 98.2 |
| Example 2 | 392.7 | 99.7 | 295.4 | 97.8 |
| Example 3 | 396.3 | 99.2 | 289.9 | 97.2 |
| Example 4 | 372.7 | 99.3 | 280.1 | 98.3 |
| Example 5 | 370.5 | 99.1 | 276.6 | 96.9 |
| Example 6 | 368.9 | 99.0 | 275.2 | 95.0 |
| Example 7 | 390.6 | 99.6 | 285.3 | 97.4 |
| Example 8 | 393.8 | 99.8 | 288.7 | 96.5 |
| Example 9 | 398.2 | 99.4 | 293.4 | 97.6 |
| Example 10 | 386.5 | 99.5 | 275.9 | 96.8 |
| Comparative Example 1 | 364.6 | 99.2 | 250.8 | 96.7 |
| Comparative Example 2 | 362.8 | 99.1 | 248.5 | 97.0 |
| Comparative Example 3 | 372.5 | 99.1 | 263.2 | 95.4 |
| Comparative Example 4 | 358.3 | 99.0 | 245.6 | 95.9 |

It can be seen from the data in Table 1:
The lithium-ion batteries provided by Examples 1-10 has a specific capacity of 370.5-405.8 mAh/g, an initial Coulombic efficiency of 99.0-100.0%, a discharge capacity reaches as high as 275.2-300.2 mAh/g in the rate performance test at 1C, and a capacity retention rate of 95.0-98.3% after 50 cycles of constant-current charging-discharging at 0.1C.

The specific analysis is as follows:
(1) from the comparison of the data of Example 1 and Comparative Examples 1, 2 and 4, it can be seen that the lithium-ion battery made of the graphite anode added with - SO₃Li-modified graphene as the ion conductive agent shows better performance (including the initial Coulombic efficiency, the specific capacity and rate performance, etc.), which is due to the fact that the -SO₃Li-modified graphene accelerates the electron transport and ion migration of the graphite anode, thereby improving the kinetics performance of the graphite anode. And the graphite anode with the addition of -SO₃Li-modified graphene showed a value higher than the theoretical capacity of graphite, mainly due to the capacity contribution of graphene;
(2) it can also be seen from the data of Example 1 and Examples 4-7 that if the addition of -SO₃Li-modified graphene is too much, the resistance increases, in turn impede the improvement of capacity and rate, which is due to -SO₃Li-modified graphene has been specially treated to conduct only ions but not electrons; if the addition of -SO₃Li-modified graphene is too small, the improvement effect will not be obvious;
(3) comparing the data of Example 1 and Comparative Example 2, it can also be seen that the various performances of the lithium-ion battery made of fluoroethylene carbonate added as the electrolyte additive is better than that without addition, and fluoroethylene carbonate and the ion conductive agent act synergistically, which helps to induce the uniform growth of the SEI film on the surface of the anode, and alleviates the expansion and deformation problem of the graphite anode in the repeated processes of charging and discharging, thereby the lithium-ion battery exhibits high capacity and rate capability, and excellent cycling performance; and
(4) however, according to the comparison of the data of Example 1 and Examples 8-9, it can also be found that overly low or overly high additive amount of fluoroethylene carbonate also affect the performance of lithium-ion batteries.

The applicant declares that the present application illustrates a high-rate and high-capacity graphite anode lithium-ion battery, a preparation method therefor and a vehicle by the above examples, but the present application is not limited to the above process steps, that is, the present application does not necessarily rely on the above examples to be implemented. Those skilled in the art should understand that any improvements of the present application, the equivalent substitution of each raw material, the addition of auxiliary ingredients, and the selection of specific methods shall fall within the protection scope and disclosure scope of the present application.

## Claims

1. A high-rate and high-capacity graphite anode lithium-ion battery, which comprises a cathode, an anode, a separator, and an electrolyte;
the anode material comprises an ion conductive agent, and the ion conductive agent comprises -SO₃Li-modified graphene; and
the electrolyte comprises an electrolyte additive, and the electrolyte additive comprises fluoroethylene carbonate.

2. The graphite anode lithium-ion battery according to claim 1, wherein a mass percentage content of the ion conductive agent in the anode material is 0.1-3%, and preferably 0.5-2%.

3. The graphite anode lithium-ion battery according to claim 1 or 2, wherein the anode material further comprises graphite, an anode binder, and an anode conductive agent.

4. The graphite anode lithium-ion battery according to claim 3, wherein a mass percentage content of graphite in the anode material is 89.5-95.5%;
preferably, a mass percentage content of the anode binder in the anode material is 2-5%; preferably, the anode binder comprises sodium carboxymethyl cellulose and/or styrene-butadiene rubber latex;
preferably, a mass percentage content of the anode conductive agent in the anode material is 2-5%;
preferably, the anode conductive agent comprises carbon black and/or carbon nanotubes.

5. The graphite anode lithium-ion battery according to any one of claims 1-4, wherein the anode material comprises any one or a combination of at least two of C-O bond, C-S bond, Li-O bond, C=C bond, or C-F bond.

6. The graphite anode lithium-ion battery according to any one of claims 1-5, wherein a mass percentage content of fluoroethylene carbonate in the electrolyte is 4-5%.

7. The graphite anode lithium-ion battery according to any one of claims 1-6, wherein the electrolyte further comprises a solvent and a solute;
preferably, the solvent comprises any one or a combination of at least two of ethylene carbonate, diethyl carbonate, or ethyl methyl carbonate;
preferably, the solute comprises lithium hexafluorophosphate;
preferably, based on a volume of 1 L for the electrolyte, a molar amount of the solute is 0.5-1.5 mol.

8. The graphite anode lithium-ion battery according to any one of claims 1-7, wherein the separator comprises any one of a polyethylene separator, a polypropylene separator, or a polypropylene/polyethylene/polypropylene composite separator.

9. A preparation method for a graphite anode lithium-ion battery, which is used for the preparation of the graphite anode lithium-ion battery according to any one of claims 1-8, comprising the following steps:
- mixing the anode material and an anode solvent, coating on an anode current collector, and subjecting the anode current collector to roll-pressing and slitting to obtain an anode plate; and
- assembling the anode plate obtained from step (1), a cathode plate, and a separator, and adding the electrolyte in drops to obtain the graphite anode lithium-ion battery.

10. The preparation method according to claim 9, wherein the anode solvent in step (1) comprises water.

11. The preparation method according to claim 9 or 10, wherein the anode current collector in step (1) comprises a copper foil.

12. A vehicle, which applies the graphite anode lithium-ion battery according to any one of claims 1-8.
